# EUROPÄISCHE PATENTSCHRIFT

(11) **EP 1 382 809 B1**
(45) Veröffentlichungstag und Bekanntmachung des Hinweises auf die Patenterteilung: **15.09.2010**
(21) Anmeldenummer: 03014686.4
(22) Anmeldetag: 27.06.2003
(51) Int. Cl.: F01M 13/04, B01D 46/42

(54) **Filtereinrichtung**
Filter
Filtre

(30) Priorität: 16.07.2002 DE 10232043
(43) Veröffentlichungstag der Anmeldung: 21.01.2004
(73) Patentinhaber: Mann + Hummel GmbH, 71638 Ludwigsburg (DE)
(72) Erfinder: Dworatzek, Klemens, 68535 Edingen (DE); Muenkel, Karlheinz, 75038 Oberderdingen-Flehingen (DE); Hartmann, Marion, 68799 Reilingen (DE)
(74) Vertreter: Voth, Gerhard

(56) Entgegenhaltungen:
- DE-A- 10 046 494
- DE-C- 383 605
- FR-A- 2 414 849
- US-A- 3 160 487
- US-A- 4 579 092
- US-A1- 2001 054 418
- US-A1- 2002 088 212
- US-A1- 2003 051 455
- US-B1- 6 290 739
- DATABASE WPI Section PQ, Week 198226 Derwent Publications Ltd., London, GB; Class Q51, AN 1982-H7957E XP002255653 -& SU 861 670 A (GORKI AUTO WKS), 7. September 1981 (1981-09-07)

## Beschreibung

Die Erfindung bezieht sich auf eine Filtereinrichtung nach dem Oberbegriff des Anspruches 1.

Filtereinrichtungen zur Kurbelgehäuseentlüftung, die auch als Ölabscheider bezeichnet werden, werden zur Filterung und Reinigung der ölhaltigen Luft im Kurbelgehäuse eingesetzt, wobei das abgeschiedene Öl in den Ölkreislauf zurückgeführt und die gereinigte Luft in der Regel in den Ansaugtrakt der Brennkraftmaschine eingeleitet wird. Die Filtereinrichtung umfasst ein Filterelement in einem Filtergehäuse, dem über eine Einströmöffnung die ölhaltige Luft zugeführt wird, wobei die gereinigte Luft über eine Abströmöffnung im Filtergehäuse abgeführt wird. Aus Sicherheitsgründen ist in den Gehäusedeckel ein Überdruckventil integriert, welches mit dem Druck der Anström- bzw. Rohseite des Filterelementes beaufschlagt wird und das bei Überschreiten eines Grenz-Überdruckes zur Druckentlastung im Filtergehäuse in eine Öffnungsposition überführt wird.

Derartige Filtereinrichtungen weisen üblicherweise Zylinderform auf, das Überdruckventil befindet sich meist in einem Gehäusedeckel, der auf eine axiale Stirnseite des Filtergehäuses aufgesetzt wird. Das Überdruckventil ist in dem Gehäusedeckel gehalten und wird über eine Ventilfeder in seine Schließposition beaufschlagt. Sobald der Überdruck im Filtergehäuse einen Wert überschreitet, bei dem das Überdruckventil gegen die Kraft der Ventilfeder geöffnet wird, strömt die ölhaltige Luft über das Ventil aus dem Filtergehäuse ab.

Der Gehäusedeckel ist in eine stirnseitige axiale Gehäuseöffnung des Filtergehäuses eingesetzt und mittels eines umlaufenden Dichtringes zwischen der Innenseite der Wandung der Gehäuseöffnung und der Außenseite des Gehäusedeckels abgedichtet. Der Gehäusedeckel wird in der Regel in die Gehäuseöffnung eingeschraubt, wofür ein Gewinde zwischen Wandung der Gehäuseöffnung und Gehäusedeckel vorgesehen ist.

Soll beispielsweise für Wartungszwecke der Gehäusedeckel abgenommen werden, so besteht die Gefahr, dass die Drehbewegung zum Öffnen des Gehäusedeckels zu Beschädigungen des Dichtringes führt, welcher insbesondere nach längerer Verweilzeit zwischen Wandung der Gehäuseöffnung und Gehäusedeckel fest zwischen beiden Bauteilen verklebt sein kann, so dass eine Relativdrehbewegung zwischen Filtergehäuse und Gehäusedeckel zu hohen, in Umfangsrichtung auf den Dichtring wirkenden Kräften führen kann, welche den Dichtring beschädigen können. Ebenso bewirkt die Verklebung des Dichtringes einen stark erhöhten Kraftaufwand beim Öffnen des Gehäusedeckels.

Die WO01/47618 A2 offenbart eine Filtereinrichtung mit einem ringförmigen Filterelement in einem Filtergehäuse, welches stirnseitig von einem ersten Deckelelement übergriffen ist, auf das ein zweites Deckelelement aufschraubbar ist. Das erste und das zweite Deckelelement begrenzen einen gemeinsamen Aufnahmeraum an der Stirnseite des Filterelementes, in dem ein Ventil aufgenommen ist, das an der Stirnseite eines zentralen Innenrohres im Filterelement positioniert ist.

Das Ventil reguliert die Strömung von Gas in den axialen Strömungsraum im Filterelement. Darüber hinaus kommt dem Ventil eine Ausgleichsfunktion für den Fall zu, dass das Gas im Inneren einen Grenzwert überschreitet. In diesem Fall öffnet das Ventil gegen eine Feder und das Gas strömt zum Ausgleich in das innere Volumen, welches unmittelbar unterhalb eines äußeren Deckels gebildet ist.

Der Erfindung liegt das Problem zugrunde, eine konstruktiv einfach aufgebaute und leicht zu montierende Filtereinrichtung zu schaffen, die in einem Gehäusedeckel ein Überdruckventil aufweist.

Dieses Problem wird erfindungsgemäß mit den Merkmalen des Anspruches 1 gelöst. Die Unteransprüche geben zweckmäßige Weiterbildungen an.

Die erfindungsgemäße Filtereinrichtung weist einen zweigeteilten Gehäusedeckel mit einem Innendeckel und einem Außendeckel auf, wobei das Überdruckventil in den Innendeckel eingesetzt ist. Zwischen Innendeckel und Außendeckel ist ein Abströmweg zur Ableitung des bei geöffnetem Überdruckventil austretenden Mediums gebildet.

Innendeckel und Außendeckel nehmen in dieser Ausführung unterschiedliche Funktionen ein. Der Innendeckel ist Träger des Überdruckventils und dient außerdem zum druckdichten Abdichten der Gehäuseöffnung im Filtergehäuse, in die der Innendeckel eingesetzt ist. Der Außendeckel übergreift den Innendeckel einschließlich Überdruckventil und schützt somit das Ventil vor Verschmutzungen von außen. Da der Außendeckel keine Abdichtfunktion wahrnimmt, sind auch keine Dichtelemente zwischen Gehäusewandung und Außendeckel erforderlich. Es reicht aus, derartige Dichtelemente, insbesondere einen Dichtring, zwischen Innendeckel und Wandung der Gehäuseöffnung vorzusehen. Der Außendeckel bietet zusätzlich zum Schutz vor Verschmutzungen auch einen Schutz gegen mechanische Beschädigungen des Überdruckventils.

Gemäß der Erfindung sind Innendeckel und Außendeckel über eine Rasteinrichtung zu verbinden, was den Vorteil besitzt, dass auf eine Verbindung zwischen Innendeckel und Wandung der Gehäuseöffnung grundsätzlich verzichtet werden kann und der Innendeckel axial ausschließlich über die Rasteinrichtung zwischen Innen- und Außendeckel festgesetzt wird. Axiale Kräfte, welche auf den Innendeckel wirken, werden über die Rasteinrichtung auf den Außendeckel und weiterhin vom Außendeckel über die Verschlusseinrichtung auf die Wandung der Gehäuseöffnung übertragen.

Der Abströmweg zwischen Innendeckel und Außendeckel ist gemäß einer bevorzugten Ausführung dadurch gebildet, dass die beiden Deckel auf Abstand zueinander angeordnet sind, wodurch der Abströmweg die Form eines scheibenförmigen Raumes zwischen den beiden Deckeln einnimmt, dessen Durchmesser im Wesentlichen demjenigen von Innen- bzw. Außendeckel entspricht.

Der Abströmweg zwischen Innendeckel und Außendeckel bietet den weiteren Vorteil, dass der Impuls des bei geöffnetem Überdruckventil austretenden Fluids im Abströmweg abgeschwächt wird, so dass das aus der Filtereinrichtung austretende Fluid keinen bzw. nur einen geringen Druckstoß bei der Ableitung in die Umgebung besitzt. Die Strömungsgeschwindigkeit des Fluids wird im Abströmweg deutlich herabgesetzt.

Weitere Vorteile und zweckmäßige Ausführungen sind den weiteren Ansprüchen, der Figurengeschreibung und den Zeichnungen zu entnehmen. Es zeigen:
- Fig. 1: eine perspektivische Ansicht einer Filtereinrichtung, in deren Gehäusedeckel ein Überdruckventil angeordnet ist,
- Fig. 2: die Filtereinrichtung in einem Längsschnitt durch ei- nen nicht erfindungsgemäßen Filter,
- Fig. 3: ein zweiteilig ausgeführter Gehäusedeckel für die Filtereinrichtung, dargestellt in einer schematischen Ansicht,
- Fig. 4: ebenfalls ein zweiteiliger Gehäusedeckel für die Fil- tereinrichtung, jedoch in einer konstruktiven Dar- stellung,
- Fig. 5: eine schematische Darstellung eines Überdruckventi- les, dessen Ventilkörper in Schließposition des Ven- tiles von einer Klemmeinrichtung mit einer quer zur Verschieberichtung des Ventilkörpers wirkenden Klemm- kraft beaufschlagt wird,
- Fig. 6: ein Überdruckventil in einer modifizierten Ausführung mit zwei separat ausgeführten Klemmeinrichtungen, über die der Ventilkörper des Überdruckventiles so- wohl in seiner Schließposition als auch in seiner Öffnungsposition mit einer Klemmkraft beaufschlagt wird.

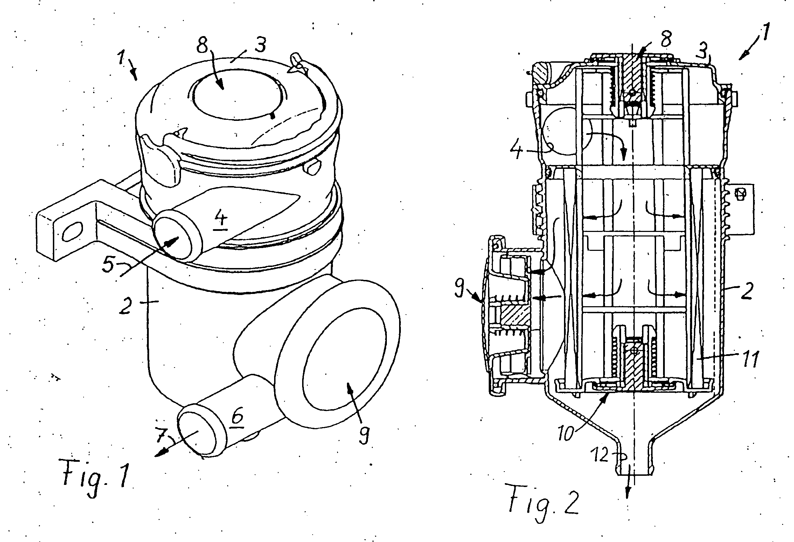

Die in Fig. 1 dargestellte Filtereinrichtung 1 weist in einem etwa zylindrischen Gehäuse 2, welches von einem abnehmbaren Gehäusedeckel 3 zu verschließen ist, ein von einem zu reinigenden Medium zu durchströmendes Filterelement auf, wobei das zu reinigende Medium über einen seitlich am Filtergehäuse 2 angeordneten Einlasskanal 4 in Pfeilrichtung 5 in den Innenraum der Filtereinrichtung einführbar ist und nach erfolgter Reinigung das Medium über einen weiteren, seitlich angeordneten Auslasskanal 6 in Pfeilrichtung 7 abgeleitet wird. Das zu reinigende Medium kann gasförmig, gegebenenfalls auch flüssig sein. Gemäß einer bevorzugten Ausführung ist die Filtereinrichtung 1 als Ölabscheider ausgebildet, in welchem Öltröpfchen aus einem Öl-Luft-Gemisch abgeschieden werden, welches beispielsweise im Kurbelgehäuse einer Brennkraftmaschine entsteht, wobei die gereinigte Luft aus dem Kurbelgehäuse abgeleitet und insbesondere einem Ansaugkanal der Brennkraftmaschine zugeführt wird. Es kommt aber auch eine Anwendung in einem Gasfilter oder einem Flüssigkeitsfilter in Betracht.

Wie Fig. 1 in Verbindung mit Fig. 2 zu entnehmen, ist in den Gehäusedeckel 3, welcher im Bereich einer axialen Stirnseite des Filtergehäuses 2 angeordnet ist, ein Überdruckventil 8 integriert, welches mit dem Druck auf der Anströmseite des Filterelementes beaufschlagt wird und im Falle eines Übersteigens eines zulässigen Grenzdruckes in seine Öffnungsposition verstellt wird, so dass das eingeleitete Medium auf der Rohseite das Filtergehäuse verlassen kann und eine Überlastung verhindert wird.

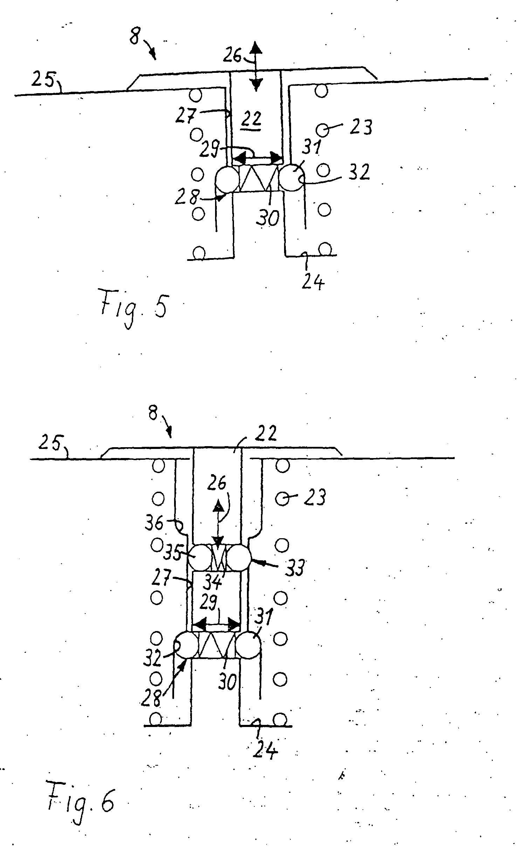

Auf der Reinseite der Filtereinrichtung befindet sich im Bereich des Auslasskanals 6 ein Druckregulierungsventil 9, über das verhindert werden soll, dass im Kurbelgehäuse ein zu hoher Unterdruck entsteht. Hier muss immer ein relativ geringer Unterdruck herrschen, welcher sich in einem sehr kleinen Druckfenster bewegt. Bei einem sehr hohen Unterdruck auf der Saugrohrseite würde sich dieser entgegen der Ausströmrichtung 7 über das im Normalfall offene Druckregulierventil 9 entgegen der Einströmrichtung 5 bis in das Kurbelgehäuse fortpflanzen. Das Druckregulierventil 9 befindet sich für den Fall, dass auf der Reinseite ein relativer Unterdruck, welcher sich innerhalb des gewünschten Druckfensters befindet, gegenüber der Außenseite der Filtereinrichtung 1 besteht, in Öffnungsposition. Dieses wird durch eine Voreinstellung des Druckregulierventils 9 mittels der Ventilfeder 23 (Fig. 5) erzielt. Übersteigt der relative Unterdruck gegenüber dem Druck auf der Außenseite der Filtereinrichtung 1 jedoch die diesem Druck entgegen wirkende Vorspannkraft der Ventilfeder 23, wird das Druckregulierventil in seine Schließposition überführt.

Wie der Schnittdarstellung gemäß Fig. 2 weiterhin zu entnehmen, wird das zu reinigende Medium über den Einlasskanal 4 in das Innere des Filtergehäuses 2 eingeleitet, in welchem sich ein zylindrisches Filterelement 11 befindet, dessen radiale Innenseite die Anströmseite bildet und von dem zu reinigenden Fluid radial von innen nach außen durchströmt wird. Im Falle eines Abscheiders werden die abgeschiedenen Öltröpfchen auf der radialen Innenseite des Filterelementes 11 nach unten abgeleitet. Die gereinigte Luft passiert das Filterelement radial von innen nach außen, wird in einem das Filterelement 11 radial umgreifenden Ringraum gesammelt und nach dem Passieren des Druckregulierungsventiles 9 nach außen abgeleitet.

Im Bodenbereich befindet sich im Innenraum des Filterelementes 11 ein Bypassventil 10, welches bei Übersteigen eines Mindestdruckes in seine Öffnungsposition überführt wird, woraufhin die abgeschiedenen Öltröpfchen nach unten abgeleitet und über einen konisch zulaufenden Bereich des Filtergehäuses 2 sowie einen Austrag 12 abgeleitet werden.

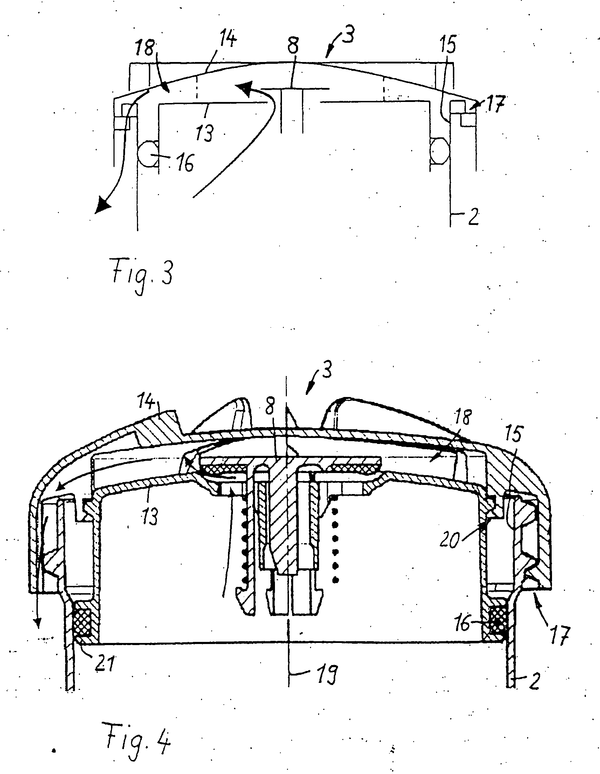

Die Fig. 3 und 4 zeigen einen Gehäusedeckel 3 in einer modifizierten Ausführung. Der Gehäusedeckel 3 ist zweiteilig aufgebaut und umfasst einen Innendeckel 13 sowie einen Außendeckel 14. Der Innendeckel 13 ist in eine Gehäuseöffnung 15 des Filtergehäuses 2 eingesetzt, wobei auf der Außenseite des Innendeckels 13 ein Dichtring 16 gehalten ist, der an der Innenwand der Gehäuseöffnung 15 dichtend anliegt. Der Außendeckel 14 liegt näherungsweise parallel zum Innendeckel 13 und übergreift die Gehäuseöffnung 15, so dass die Innenseite eines zylindrischen Wandabschnitts des Außendeckels 14 benachbart zur Außenwand der Gehäuseöffnung 15 liegt. Der Außendeckel 14 ist mit der Wandung der Gehäuseöffnung 15 über eine Verschlusseinrichtung 17 verbunden. Der Innendeckel 13 ist Träger des Überdruckventiles 8, welches in Öffnungsposition einen Strömungsweg durch den Innendeckel 13 in einen Abströmweg 18 hinein freigibt, welcher zwischen dem Innendeckel 13 und dem Außendeckel 14 gebildet ist. Der Strömungsweg 18 kommt insbesondere dadurch zustande, dass Innendeckel 13 und Außendeckel 14 auf Abstand zueinander liegen, wodurch ein etwa tellerförmiger Strömungsraum gebildet ist, der sich im Wesentlichen über die Stirnseite von Innendeckel und Außendeckel erstreckt. Es kann gegebenenfalls aber auch zweckmäßig sein, im Bereich der Außenseite des Innendeckels 13 und/oder im Bereich der Innenseite des Außendeckels 14 Strömungsnuten für den abzuleitenden Überdruck aus dem Inneren des Filtergehäuses 2 vorzusehen.

Das bei geöffnetem Überdruckventil 8 in den Abströmweg 18 einfließende Medium wird radial nach außen geführt und verlässt den Strömungsweg 18 zwischen Innendeckel 13 und Außendeckel 14 über axiale Strömungsspalte, welche zwischen der Außenwand der Gehäuseöffnung 15 und der Innenseite des zylindrischen Abschnittes des Außendeckels 14 gebildet sind.

Wie im Einzelnen Fig. 4 zu entnehmen, ist die Verschlusseinrichtung 17, über die der Außendeckel 14 mit der Wandung der Gehäuseöffnung 15 verbunden ist, als Verschlussgewinde ausgeführt. Das Verschlussgewinde weist Abschnitte unterschiedlicher Gewindesteigung auf, wobei in einem Bereich benachbart zur Verschlussposition des Außendeckels 14, der in Fig. 4 durch den unteren Teil des Gewindes auf der Außenwand des Gehäusedeckels gebildet ist, sich der Abschnitt geringerer Steigung befindet und im Bereich der axialen Stirnseite der Gehäuseöffnung ein Abschnitt mit größerer Gewindesteigung angeordnet ist. Dies führt dazu, dass bei einem Aufsetzen des Außendeckels 14 auf das Verschlussgewinde zu Beginn der Schließbewegung aufgrund der großen Gewindesteigung zunächst eine verhältnismäßig große axiale Verschiebung entlang der Filterlängsachse 19 in Richtung Verschlussposition erzielt wird, wohingegen bei Erreichen des Abschnittes geringerer Steigung und Annäherung an den Dichtsitz bzw. die Verschlussposition des Außendeckels 14 sich eine langsamere axiale Verschiebung des Außendeckels einstellt, wodurch insbesondere bei einem manuellen Festziehen des Gehäusedeckels mehr bzw. eine besser dosierbare Kraft zum Erreichen des Dichtsitzes zur Verfügung steht.

In das Verschlussgewinde können axiale Strömungsnuten eingebracht sein, um ein hindernisfreies Abströmen des Fluids im Abströmraum bzw. Abströmweg 18 zu ermöglichen.

Zusätzlich zu der Verschlusseinrichtung 17 zwischen Wandung der Gehäuseöffnung 15 und Außendeckel 14 ist eine Rasteinrichtung 20 vorgesehen, die zwischen Innendeckel 13 und Außendeckel 14 angeordnet ist und eine in Achsrichtung formschlüssige Verrastung zwischen Innen- und Außendeckel ermöglicht. Die Rasteinrichtung 20 umfasst einen bzw. mehrere Rastnocken, welche zweckmäßig auf der außen liegenden Umfangsseite des Innendeckels 13 angeordnet ist, sowie eine Rastnut, die am Innenmantel des Außendeckels 14 eingebracht ist. Die Rasteinrichtung 20 erlaubt in Achsrichtung eine formschlüssige Verbindung zwischen Innendeckel und Außendeckel. Zweckmäßig wird die Rastposition erst bei Erreichen des Dichtsitzes erreicht. Weiterhin kann es vorteilhaft sein, zur Realisierung eines Bajonettverschlusses mit einer hintereinander auszuführenden axialen Verschiebe- und rotatorischen Drehbewegung die Rastnocken auf der Außenseite des Innendeckels 13 nicht durchgehend umlaufend, sondern mit zwischenliegenden Abständen auszuführen, indem beispielsweise im 120°-Winkel verteilt drei einzelne Rastnocken angeordnet sind, denen entsprechend ausgeführte Rastnutabschnitte am Außendeckel zugeordnet sind. Die Rasteinrichtung 20 stellt eine zusätzliche Sicherung gegen ein unbeabsichtigtes Lösen des Gehäusedeckels dar.

Wie Fig. 4 weiterhin zu entnehmen, ist der Dichtring 16 in eine umlaufende Dichtnut 21 an der Außenseite des Innendeckels 13 eingesetzt. Die Aufteilung des Gehäusedeckels 3 in zwei separate Deckelteile bietet den Vorteil einer funktionalen Trennung zwischen Innendeckel und Außendeckel. Der Innendeckel 13 ist Träger des Dichtringes 16, dem Außendeckel 14 kommt dagegen die Funktion zu, beide Deckelteile am Filtergehäuse 2 zu arretieren und außerdem das Überdruckventil 8 vor Verschmutzung zu schützen. Diese Funktionsteilung bietet außerdem den Vorteil, dass der Dichtring beim Öffnen und Schließen des Deckels nicht verdreht wird, sondern lediglich gemeinsam mit dem Innendeckel 13 in Richtung der Längsachse 19 translatorisch verschoben werden muss. Da der Dichtring 16 insbesondere nach einem längeren Einsatz in seiner Dichtposition mit der anliegenden Innenwand der Gehäuseöffnung 15 verkleben kann, sind für ein translatorisches, axiales Entfernen des Innendeckels geringere Kräfte erforderlich als dies bei einer Drehbewegung der Fall wäre. Hierdurch wird der Dichtring geschont und eine Beschädigung beim Einsetzen und Herausnehmen vermieden. Zudem bietet die Zweiteilung des Gehäusedeckels 3 den Vorteil, dass der zwischenliegender Abströmweg 18 mit geringem konstruktivem Aufwand herzustellen ist, über den der bei geöffnetem Ventil 8 aus dem Gehäuseinneren entweichende Überdruck nach außen abgeleitet werden kann.

Der Innendeckel 13, der Außendeckel 14, die Verschlusseinrichtung 17 und die Rasteinrichtung 20 können jeweils aus Kunststoff gefertigt sein.

In Fig. 5 ist eine besondere Ausgestaltung eines Überdruckventiles 8 dargestellt. Das Überdruckventil 8 besitzt einen Ventilkörper 22, welcher in Verstellrichtung 26 axial in einer Ventilkörperführung 27 zwischen der in Fig. 5 dargestellten Schließstellung und einer angehobenen Öffnungsstellung zu verstellen ist, wobei die Ventilkörperführung 27 in einem Gehäuseteil 25 ausgebildet ist. Der Ventilkörper 22 wird über eine Ventilfeder 23, welche an einem fest mit dem Ventilkörper 22 verbundenen Ventilteller 24 abgestützt ist, in seine Schließposition beaufschlagt. Bei einem im Inneren des Gehäuses wirkenden Überdruck, welcher die Schließkraft der Ventilfeder 23 übersteigt, wird der Ventilkörper 22 in seine Öffnungsposition verstellt, so dass der Überdruck entweichen kann.

Zur Beeinflussung der Federcharakteristik und des Öffnungs- bzw. Schließverhaltens ist das Überdruckventil 8 mit einer Klemmeinrichtung 28 versehen, welche den Ventilkörper 22 mit einer Klemmkraft beaufschlagt, die gemäß Pfeilrichtung 29 quer zur Verstellrichtung 26 in Radialrichtung verläuft und den Ventilkörper 22 in der Ventilkörperführung 27 festklemmt. Die Klemmeinrichtung 28 ist fest mit dem Ventilkörper 22 verbunden und umfasst eine Zusatzfeder 30, die insbesondere als Druckfeder ausgeführt ist und deren Federwirkung in Pfeilrichtung 29 verläuft. Die Zusatzfeder 30 ist an ihren beiden axialen Stirnseiten mit Rastkugeln 31 verbunden, welche durch die Kraft der Zusatzfeder radial nach außen mit einer Klemmkraft beaufschlagt werden und in Rastausnehmungen 32 eingepresst werden, die in der Innenwand der Ventilkörperführung 27 ausgebildet sind und zweckmäßig an die Form der Rastkugeln 31 angepasst sind. Die Klemmeinrichtung 28 befindet sich in der Schließposition des Ventilkörpers 22 in ihrer Raststellung, so dass für ein Überführen des Überdruckventiles 8 in die Öffnungsstellung ein höherer Überdruck erforderlich ist als bei Ausführungen ohne Klemmeinrichtung 28. Die Höhe des zusätzlich erforderlichen Druckes zum Lösen der Klemmeinrichtung 28 und Überführen des Ventiles in die Öffnungsposition kann über die Kraft der Zusatzfeder 30 sowie die Geometrie der von der Zusatzfeder beaufschlagten Rastelemente und die Geometrie der Rastausnehmungen beeinflusst werden.

Nachdem der Grenzdruck erreicht worden ist, oberhalb dem das Ventil in die Öffnungsstellung überführt wird, werden zunächst auf Grund der axialen Stellbewegung des Ventilkörpers in Richtung Öffnungsposition die Rastkugeln 31 entgegen der Kraft der Zusatzfeder 30 nach innen gedrückt und liegen bei einem Fortschreiten der Öffnungsbewegung an der Innenwand der Ventilkörperführung 27 an. Die Klemmkraft, die von der Klemmeinrichtung im zwischenliegenden Überführungsabschnitt zwischen Schließ-und Öffnungsposition auf die Innenwand der Ventilkörperführung ausgeübt wird, ist deutlich geringer als die Klemmkraft in der Schließposition des Ventiles, da in Klemmposition die Klemmeinrichtung eine formschlüssige Raststellung einnimmt, im zwischenliegenden Überführungsabschnitt dagegen nur an der Innenwand entlang gleitet. Zusätzlich ist zu berücksichtigen, dass in Ruhestellung des Ventilkörpers zunächst eine höhere Haftreibung zwischen den von der Zusatzfeder beaufschlagten Rastelementen und den Rastausnehmungen zu überwinden ist, wohingegen bei einer Bewegung des Ventilkörpers nur eine geringere Gleitwirkung zwischen den nach außen gedrückten Rastelementen und der Innenwand der Ventilkörperführung wirkt.

Dieser starke Abfall der Klemmkraft verändert die Gesamtfedercharakteristik und das Öffnungsverhalten des Ventiles. Der Ventilkörper ist gegenüber Ausführungen aus dem Stand der Technik mit höherer Überführungsgeschwindigkeit von der Schließposition in die Öffnungsposition zu überführen. Das Ventil kann schlagartig in die Öffnungsposition verstellt werden.

Auch im Ausführungsbeispiel nach Fig. 6 ist ein Überdruckventil 8 dargestellt, welches sich in seiner Schließposition befindet und axial in Verstellrichtung 26 zwischen Schließ- und Öffnungsposition zu verstellen ist. Das Ventil besitzt wie dasjenige des vorherigen Ausführungsbeispieles eine Klemmeinrichtung 28, über die der Ventilkörper 22 in Schließposition mit einer quer zur Verstellrichtung 26 liegenden Klemmkraft gemäß Pfeilrichtung 29 beaufschlagt wird. Des Weiteren ist eine zweite Klemmeinrichtung 33 vorgesehen, die entsprechend wie die erste Klemmeinrichtung 28 aufgebaut ist und eine weitere Zusatzfeder 34 und von der Zusatzfeder 34 beaufschlagte, axiale Rastkugeln 35 umfasst. Die Rastkugeln 35 greifen in Öffnungsposition des Ventiles in Rastausnehmungen 36 ein, die in der Innenwand der Ventilkörperführung 27 ausgebildet sind. Auf diese Weise befindet sich der Ventilkörper 22 sowohl in seiner Schließposition als auch in seiner Öffnungsposition jeweils in einer Raststellung, aus der eine Überführung in die jeweils gegenüberliegende Endposition nur mit einem erhöhten Kraftaufwand möglich ist, verglichen mit Ausführungen ohne Klemmeinrichtungen. Die Schließbewegung des Ventiles wird hierbei durch die Kraft der Ventilfeder 23 unterstützt. Sobald der Überdruck im Gehäuseinneren einen Grenzwert unterschreitet, reicht die Kraft der Ventilfeder aus, den Ventilkörper 22 gegen den verbleibenden Überdruck im Gehäuseinneren und gegen die Klemmkraft der zweiten Klemmeinrichtung 33 axial in Richtung seiner Schließposition zu verstellen. Analog zur Öffnungsbewegung kann mit Hilfe der zweiten Klemmeinrichtung 33 ein schlagartiges Schließen des Ventiles erreicht werden, da die Klemmkraft schlagartig reduziert wird, sobald die Rastkugeln 35 der zweiten Klemmeinrichtung 33 aus ihrem Sitz in den Rastausnehmungen 36 herausgehoben werden.

## Patentansprüche

1. Filtereinrichtung, insbesondere Filtereinrichtung zur Kurbelgehäuseentlüftung, mit einem Filterelement (11), das in einem Filtergehäuse (2) angeordnet ist, welches von einem Gehäusedeckel (15) zu verschließen ist, wobei dem Filterelement (11) über eine Einströmöffnung im Filtergehäuse (2) zu reinigendes Medium zuführbar ist und auf der Abströmseite des Filterelements (11) gereinigtes Medium über eine Abströmöffnung im Filtergehäuse (2) abzuführen ist, wobei in den Gehäusedeckel ein Überdruckventil (8) integriert ist, das mit dem Druck auf der Anströmseite des Filterelements (11) im Betrieb beaufschlagt wird, wobei der Gehäusedeckel zweigeteilt ist und einen Innendeckel (13) und einen Außendeckel (14) aufweist, wobei das Überdruckventil (8) in den Innendeckel (13) eingesetzt ist, der die Gehäuseöffnung (15) verschließt, wobei zwischen Innendeckel (13) und Außendeckel (14) ein Abströmweg (18) zur Ableitung des Mediums aus dem Filtergehäuse (2) gebildet ist, **dadurch gekennzeichnet, dass** Innendeckel (13) und Außendeckel (14) über eine Rasteinrichtung (20) verbunden sind, wobei zwischen Innendeckel (13) und Wandung der Gehäuseöffnung (15) ein Dichtring (16) angeordnet ist.

2. Filtereinrichtung nach Anspruch 1, **dadurch gekennzeichnet, dass** die Rasteinrichtung (20) im Umfangsbereich zwischen Außenseite des Innendeckels (13) und Innenseite des Außendeckels (14) angeordnet ist.

3. Filtereinrichtung nach Anspruch 1 oder 2, **dadurch gekennzeichnet, dass** über den Umfang verteilt eine Mehrzahl einzelner Rasteinrichtungen (20) zwischen Innendeckel (13) und Außendeckel (14) vorgesehen sind und zwischen benachbarten Rasteinrichtungen (20) ein Strömungsweg gebildet ist.

4. Filtereinrichtung nach einem der Ansprüche 1 bis 3, **dadurch gekennzeichnet, dass** der Außendeckel (14) über eine Verschlusseinrichtung (17) mit der Wandung der Gehäuseöffnung (15) verbunden ist.

## Claims

1. Filtering device, in particular filtering device for crankcase ventilation, with a filter element (11) which is disposed in a filter housing (2) which is to be closed by a housing cover (15), the filter element (11) being supplied with medium to be cleaned through an inflow opening in the filter housing (2) and at the off-flow side of the filter element (11) cleaned medium being evacuated via an outflow opening in the filter housing (2), a pressure relief valve (8), which receives the pressure at the on-flow side of the filter element (11) in operation, being integrated in the housing cover, the housing cover being split in two parts and featuring an inner cover (13) and an outer cover (14), the pressure relief valve (8) being inserted into the inner cover (13) which closes the housing opening (15), an outflow path (18) for evacuating the medium out of the filter housing (2) being formed between inner cover (13) and outer cover (14), **characterized in that** inner cover (13) and outer cover (14) are connected via a locking device (20), a sealing flange (16) being disposed between inner cover (13) and the wall of the housing opening (15).

2. Filtering device according to claim 1, **characterized in that** the locking device (20) is disposed in the peripheral area between the exterior side of the inner cover (13) and the interior side of the outer cover (14).

3. Filtering device according to claim 1 or 2, **characterized in that**, spread over the circumference, a plurality of individual locking devices (20) are provided between inner cover (13) and outer cover (14) and that a flow path is formed between adjacent locking devices (20).

4. Filtering device according to one of the claims 1 to 3, **characterized in that** the outer cover (14) is connected with the wall of the housing opening (15) via a closing device (17).

## Revendications

1. Dispositif de filtrage, notamment dispositif de filtrage pour la purge du carter de vilebrequin, avec un élément filtrant (11) disposé dans un boîtier de filtre (2) et pouvant être obturé par un couvercle de boîtier (15), le milieu à nettoyer pouvant être acheminé à l'élément filtrant (11) par l'intermédiaire d'un orifice d'admission situé dans le boîtier de filtre (2) et le milieu nettoyé pouvant être évacué du côté écoulement de l'élément filtrant (11) par l'intermédiaire d'un orifice d'écoulement situé dans le boîtier de filtre (2), un clapet de surpression (8) alimenté pendant la marche avec la pression du côté admission de l'élément filtrant (11) étant intégrée au couvercle du boîtier, le couvercle de boîtier étant constitué de deux parties et présentant un couvercle intérieur (13) et un couvercle extérieur (14), le clapet de surpression (8) étant monté dans le couvercle intérieur (13) qui obture l'ouverture du boîtier (15), un canal d'écoulement (18) destiné à évacuer le milieu du boîtier de filtre (2) étant formé entre le couvercle intérieur (13) et le couvercle extérieur (14), **caractérisé en ce que** le couvercle intérieur (13) et le couvercle extérieur (14) sont reliés par un dispositif d'arrêt (20), une bague d'étanchéité (16) étant disposée entre le couvercle intérieur (13) et la paroi de l'ouverture du boîtier (15).

2. Dispositif de filtrage selon la revendication 1, **caractérisé en ce que** le dispositif d'arrêt (20) est disposé dans la partie périphérique entre la face extérieure du couvercle intérieur (13) et la face intérieure du couvercle extérieur (14).

3. Dispositif de filtrage selon la revendication 1 ou 2, **caractérisé en ce que** plusieurs dispositifs d'arrêt individuels (20) répartis sur la périphérie sont prévus entre le couvercle intérieur (13) et le couvercle extérieur (14) et qu'un canal d'écoulement est formé entre les dispositifs d'arrêt voisins (20).

4. Dispositif de filtrage selon l'une des revendications 1 à 3, **caractérisé en ce que** le couvercle extérieur (14) est relié au moyen d'un dispositif de fermeture (17) à la paroi de l'ouverture du boîtier (15).
